# EUROPÄISCHE PATENTSCHRIFT

(11) **EP 1 800 986 B1**
(45) Veröffentlichungstag und Bekanntmachung des Hinweises auf die Patenterteilung: **26.08.2009**
(21) Anmeldenummer: 06125285.4
(22) Anmeldetag: 04.12.2006
(51) Int. Cl.: B61D 17/04, B62D 31/02

(54) **Verbundsystem für eine Wand- oder Bodenstruktur**
Linking system for a wall or floor structure
Système d'assemblage pour une structure de paroi ou de sol

(30) Priorität: 20.12.2005 DE 102005061007
(43) Veröffentlichungstag der Anmeldung: 27.06.2007
(73) Patentinhaber: SIEMENS AKTIENGESELLSCHAFT, 80333 München (DE)
(72) Erfinder: Gehnen, Jürgen, 47829 Krefeld (DE)

(56) Entgegenhaltungen:
- EP-A- 0 369 134
- EP-A- 0 697 319
- EP-A- 1 442 821
- US-A1- 2002 125 299

## Beschreibung

Die Erfindung bezieht sich auf ein Verbundsystem aus wenigstens zwei Metallprofilen, die zur Ausbildung einer Wand- oder Bodenstruktur ausgeführt sind, wobei einander benachbarte und miteinander zu verbindende Seitenabschnitte der zwei Metallprofile zur gemeinsamen Ausbildung eines Schiebesitzes ausgelegt sind.

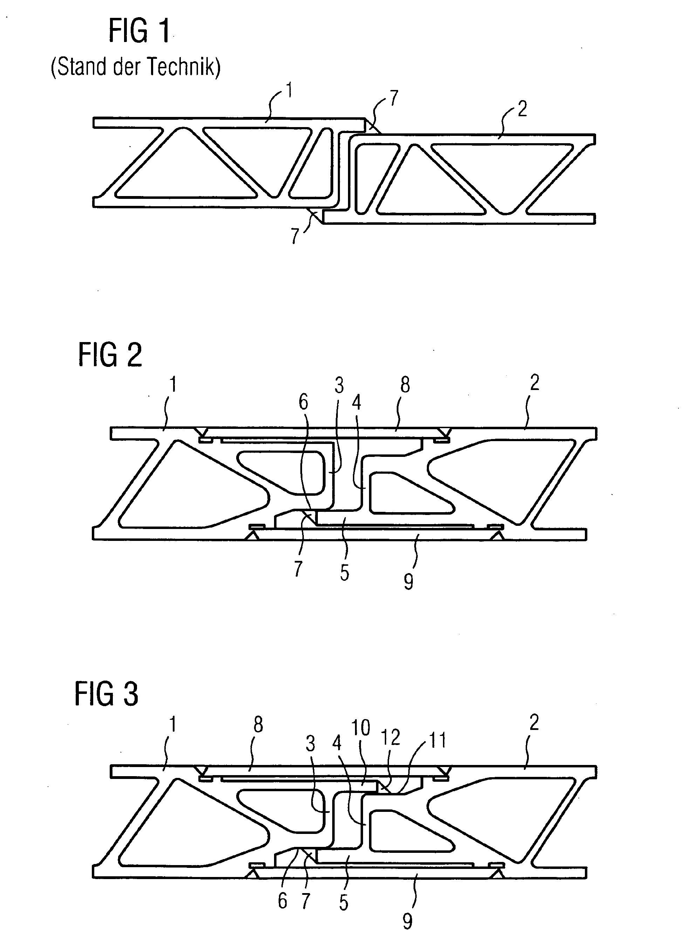

Es ist allgemein üblich, Strangpressprofile als Beispiel für Metallprofile durch Schweißen mit einander zu verbinden, beispielsweise bei der Herstellung von Wagenkästen von Schienenfahrzeugen. Dabei ist im Hinblick auf einen wirtschaftlichen Fertigungsprozess erwünscht, an manchen Fügestellen der Strangpressprofile Toleranzen ausgleichen zu können. Ein solcher Toleranzausgleich ist durch die in Figur 1 dargestellte, bekannte Anordnung möglich, bei der das eine Strangpressprofil 1 auf dem anderen Strangpressprofil 2 abgelegt ist, so dass von einander gegenüberliegenden Seitenabschnitten der beiden Strangpressprofile 1, 2 ein Schiebesitz gebildet wird. Nach einem maßgerechten Ausrichten der Strangpressprofile 1 und 2 werden sie durch Einbringen von relativ mächtigen Kehlnähten 7 miteinander verbunden. Diese Kehlnähte verlaufen dabei zwischen einer jeweiligen Außenfläche eines der Strangpressprofile 1, 2 und einer Stirnflächen des jeweils anderen Strangpressprofils 1, 2. Insgesamt ergibt sich somit ein zusammenhängendes Verbundsystem, das beispielsweise zur Ausbildung einer Wand- oder Bodenstruktur eines Wagenkastens zum Einsatz kommen kann.

Hinsichtlich einer Auslegung eines solchen Verbundsystems ist zur berücksichtigen, dass gerade die Anforderungen an übertragbare Crash-Lasten immer weiter zunehmen.

Ausgehend hiervon liegt der Erfindung die Aufgabe zugrunde, ein Verbundsystem der eingangs genannten Art derart weiterzuentwickeln, dass bei beibehaltener Möglichkeit zum Toleranzausgleich höhere Crash-Lasten bewältigt werden können.

Diese Aufgabe wird gelöst durch ein Verbundsystem aus wenigstens zwei Metallprofilen, die zur Ausbildung einer Wand- oder Bodenstruktur ausgeführt sind, wobei einander benachbarte und miteinander zu verbindende Seitenabschnitte der zwei Metallprofile zur gemeinsamen Ausbildung eines Schiebesitzes ausgelegt sind, wobei die Seitenabschnitte von einem jeweiligen Hauptkörper der Metallprofile vorspringen und zu einer jeweiligen Oberseite und Unterseite des Verbundsystems einen solche Abstand einhalten, dass sich ergebende Lücken in der Oberseite und der Unterseite durch Passbleche schließbar sind, die jeweils auf beiden Metallprofilen abgestützt sind, wobei die Passbleche jeweils mit beiden Metallprofilen verschweißt sind und der Schiebesitz durch Schweißen lagefixiert ist.

Eine solche Auslegung des Verbundsystems gestattet eine erhöhte Belastbarkeit der Metallprofilverbindung, so dass den heutzutage notwendigen übertragbaren Crash-Lasten Rechnung getragen werden kann.

In Folge des Einsatzes der Passbleche können für die einzelnen Schweißnähte dünnere Abmessungen gewählt werden, so dass sich ein geringer Wärmeeintrag in das Verbundsystem beim Schweißen ergibt. Dies hat den Vorteil, dass sich durch Schweißen ergebende Materialspannungen im Verbundsystem weitgehend vermeiden lassen.

Die Ausgestaltung des Verbundsystems gestattet außerdem eine zuverlässige zerstörungsfreie Werkstoffprüfung. Im Hinblick auf einen Innenausbau eines Wagenkastens für ein Schienenfahrzeug ist zu bemerken, dass das Verbundsystem im Gegensatz zu dem eingangs dargelegten Stand der Technik eine ebene Oberfläche bereitstellt, so dass ein Höhenausgleich zwischen den das Verbundsystem bildenden Metallprofilen entfällt.

Es kann sich außerdem der Vorteil ergeben, dass aufgrund geringerer statischer Anforderungen eine Anzahl der erforderlichen Schweißnähte reduziert wird. Allgemein zeigt das Verbundsystem auch die Eigenschaft einer Leichtbau-Konstruktion.

Wenigstens einer der beiden Seitenabschnitte, die gemeinsam den Schiebesitz bilden, kann einen auf den anderen Seitenabschnitt gerichteten Vorsprung aufweisen, der entlang einer Anlagefläche des anderen Seitenabschnitts horizontal verschiebbar ist. Auf diese Weise lässt sich ein erforderlicher Toleranzausgleich dadurch herbeiführen, dass das eine Metallprofil, das den Seitenabschnitt mit dem Vorsprung aufweist, in Richtung auf das andere Metallprofil derart verschoben wird, dass die relative Anordnung der beiden Metallprofile zueinander den Anforderungen entspricht.

Die beiden Metallprofile können mittels einer Kehlnaht, die von einer Stirnseite des Vorsprungs und der Anlagefläche begrenzt ist, miteinander verbunden sein.

In einer bevorzugten Ausführungsform des Verbundsystems sind beide Seitenabschnitte mit dem oben angesprochenen Vorsprung versehen, wobei die Seitenabschnitte punktsymmetrisch bezüglich eines zentralen Verbindungspunktes zwischen den beiden Metallprofilen ausgebildet sind. In diesem Fall können sich zwei Kehlnähte ergeben, die von den jeweiligen Stirnseiten der Vorsprünge des einen Metallprofils und den benachbarten Anlageflächen des anderen Metallprofils begrenzt werden.

Die Passbleche können jeweils durch V-Nähte mit den angrenzenden Metallprofilen verbunden sein.

Im Hinblick auf einen Einsatz des Verbundsystems bei Schienenfahrzeugen, insbesondere den Rohbau des Wagenkastens, können die Metallprofile als Strangpressprofile vorliegen.

Bei der am weitesten ausgestalteten Ausführungsform des Verbundsystems liegen somit insgesamt sechs Schweißnähte vor, von denen jeweils zwei Schweißnähte auf jedes Passblech entfallen und weitere zwei Schweißnähte zur Lagefixierung des Schiebesitzes dienen.

Ausführungsbeispiele der Erfindung werden nachfolgend anhand der Zeichnung noch näher beschrieben, wobei funktionsgleiche Komponenten eines Verbundsystems in den Zeichnungen mit denselben Bezugsziffern bezeichnet sind. Es zeigen:
- Figur 1: eine Querschnittsansicht von zwei Metallprofilen zur Ausbildung eines Verbundsystems nach dem Stand der Technik,
- Figur 2: eine Querschnittsansicht von zwei Metallprofilen zur Ausbildung eines Verbundsystems und
- Figur 3: eine Querschnittsansicht zweier Metallprofile zur Ausbildung eines zur Figur 1 alternativen Verbundsystems.

Das erste Ausführungsbeispiel eines Verbundsystems aus wenigstens zwei Strangpressprofilen 1, 2 ist in Figur 2 veranschaulicht. Diese zwei Strangpressprofile 1, 2 können beispielsweise dazu vorgesehen sein, einen Boden eines Schienenfahrzeugs auszubilden. Die beiden Strangpressprofile 1, 2 sind zueinander fluchtend angeordnet, wobei einander benachbarte und miteinander zu verbindende Seitenabschnitte 3, 4 der Strangpressprofile 1, 2 zur gemeinsamen Ausbildung eines Schiebesitzes ausgeführt sind. Die beiden Seitenabschnitte 3, 4 springen von einem jeweiligen Hauptkörper der Strangpressprofile 1, 2 vor und halten jeweils einen Abstand zu einer Ober- und einer Unterseite des aus ihnen aufzubauenden Verbundsystems ein. In Folge dessen ergeben sich bei einem aneinander Anlegen der beiden Strangpressprofile 1, 2 in der Oberseite und der Unterseite des Verbundsystems Lücken.

In Figur 2 wird veranschaulicht, dass der Schiebesitz von den beiden Seitenabschnitten 3, 4 wie folgt realisiert wird:

Der Schiebesitz 4 weist an seinem in Figur 2 tiefer gelegenen Ende einen in Richtung auf den anderen Seitenabschnitt 3 gerichteten Vorsprung 5 auf, der mit seinem äußeren Ende an einer Anlagefläche 6 des Seitenabschnitts 3 anliegt. Die Anlagefläche 6 erstreckt sich in derselben Ebene wie eine Innenseite des Vorsprungs 5, so dass das Strangpressprofil 2 entlang der Anlagefläche 6 des Seitenabschnitts 3 derart verschoben werden kann, dass eine gewünschte relative Endlage der beiden Strangpressprofile 1, 2 zueinander eingestellt werden kann.

Nachdem die gewünschte Endlage für die beiden Strangpressprofile 1, 2 erreicht ist, werden diese durch eine Kehlnaht 7 miteinander verbunden, die durch die Stirnseite des Vorsprungs 5 und die Anlagefläche 6 begrenzt ist und senkrecht zur Zeichenebene von Figur 2 verläuft.

Zum Aufbau des Verbundsystems fehlt nun noch das Schließen der Lücken in der Ober- und der Unterseite des Verbundsystems. Dies geschieht durch den Einsatz von Passblechen 8, 9, die nach Bedarf auf eine passende Breite zurecht geschnitten werden können. Nach einem Einlegen der Passbleche 8, 9, die auf den jeweiligen Strangpressprofilen 1, 2 abgestützt sind, werden die Passbleche 8, 9 durch V-Nähte mit den beiden angrenzenden Strangpressprofilen 1, 2 verschweißt. Die beiden Strangpressprofile 1, 2 sind daher bei der hier erläuterten ersten Ausführungsform des Verbundsystems durch insgesamt 5 Schweißnähte miteinander verbunden, so dass eine sehr hohe Belastbarkeit des Verbundsystems auch in einem Verbindungsbereich zwischen den beiden Strangpressprofilen 1, 2 gewährleistet wird.

Das Ausführungsbeispiel nach Figur 3 eines Verbundsystems unterscheidet sich von demjenigen, das anhand der Figur 2 erläutert worden ist, dadurch, dass auch der Seitenabschnitt 3 einen Vorsprung 10 aufweist, der in Richtung auf den Seitenabschnitt 4 verläuft. Zum Zusammenwirken mit den Vorsprung 10 weist der Seitenabschnitt 4 eine der Anlagefläche 6 vergleichbare Anlagefläche 11 auf, so dass der Vorsprung 10 bzw. das Strangpressprofil 1 insgesamt relativ zu dem Strangpressprofil 2 zur Ausbildung eines Schiebesitzes verschoben werden kann. Die beiden Seitenabschnitte 3, 4 sind punktsymmetrisch bezüglich eines zentralen Verbindungspunktes ausgelegt.

Zusätzlich zu den Schweißnähten der Ausführungsform des Verbundsystems nach Figur 2 zeigt die Ausführungsform nach Figur 3 eine Kehlnaht 12, die von der Stirnseite des Vorsprungs 10 und der Anlagefläche 11 begrenzt ist. Die Kehlnaht 12 verläuft wie die Kehlnaht 7 senkrecht zur Zeichenebene.

Die Ausführungsform des Verbundsystems nach Figur 3 erhält durch die zusätzliche Kehlnaht 12 weine weiter erhöhte Steifigkeit des Übergangsbereichs zwischen den beiden Strangpressprofilen 1, 2.

## Patentansprüche

1. Verbundsystem aus wenigstens zwei Metallprofilen (1, 2), die zur Ausbildung einer Wand- oder Bodenstruktur ausgeführt sind, wobei einander benachbarte und miteinander zu verbindende Seitenabschnitte (3, 4) der zwei Metallprofile (1, 2) zur gemeinsamen Ausbildung eines Schiebesitzes ausgelegt sind,
**dadurch gekennzeichnet,**
**dass** die Seitenabschnitte (3, 4) von einem jeweiligen Hauptkörper der Metallprofile (1, 2) vorspringen und zu einer jeweiligen Oberseite und Unterseite des Verbundsystems einen solchen Abstand einhalten, dass sich ergebende Lücken in der Oberseite und der Unterseite durch Passbleche (8, 9) schließbar sind, die jeweils auf beiden Metallprofilen (1, 2) abgestützt sind,'
wobei die Passbleche (8, 9) jeweils mit beiden Metallprofilen (1, 2) verschweißt sind und der Schiebesitz durch Schweißen lagefixiert ist.

2. Verbundsystem nach Anspruch 1,
**dadurch gekennzeichnet,**
**dass** wenigstens einer der beiden Seitenabschnitte (3, 4), die gemeinsam den Schiebesitz bilden, einen auf den anderen Seitenabschnitt (3, 4) gerichteten Vorsprung (5) aufweist, der entlang einer Anlagefläche des anderen Seitenabschnitts (3, 4) horizontal verschiebbar ist.

3. Verbundsystem nach Anspruch 2,
**dadurch gekennzeichnet,**
**dass** die beiden Metallprofile (1, 2) mittels einer Kehlnaht (7), die von einer Stirnseite des Vorsprungs (5) und der Anlagefläche (6) begrenzt ist, miteinander verbunden sind.

4. Verbundsystem nach Anspruch 1,
**dadurch gekennzeichnet,**
**dass** beide Seitenabschnitte (3, 4), die gemeinsam den Schiebesitz bilden, jeweils einen auf den anderen Seitenabschnitt (3, 4) gerichteten Vorsprung (5, 10) aufweisen, der entlang einer Anlagefläche (6, 11) des anderen Seitenabschnitts (3, 4) horizontal verschiebbar ist, wobei die Seitenabschnitte (3, 4) punktsymmetrisch bezüglich eines zentralen Verbindungspunktes zwischen den beiden Metallprofilen (1, 2) ausgebildet sind.

5. Verbundsystem nach Anspruch 3,
**dadurch gekennzeichnet,**
**dass** die beiden Metallprofile (1, 2) mittels zweier Kehlnähte (7, 12), die jeweils von einer Stirnseite eines der Vorsprünge (5, 10) und einer zugeordneten Anlagefläche (6, 11) begrenzt sind, miteinander verbunden sind.

6. Verbundsystem nach einem der Ansprüche 1 bis 5,
**dadurch gekennzeichnet,**
**dass** die Passbleche (8, 9) jeweils durch V-Nähte mit den angrenzenden Metallprofilen (1, 2) verbunden sind.

7. Verbundsystem nach einem der Ansprüche 1 bis 6,
**dadurch gekennzeichnet,**
**dass** die Metallprofile (1, 2) als Strangpressprofile (3, 4) vorliegen.

## Claims

1. Composite system composed of at least two metal profiles (1, 2) which are configured to form a wall or floor structure, wherein lateral portions (3, 4) of the two metal profiles (1, 2) that are adjacent to one another and are to be connected to one another are designed to jointly form a sliding seat,
**characterized in that**
the lateral portions (3, 4) project from a respective main body of the metal profiles (1, 2) and maintain such a spacing from a respective upper side and lower side of the composite system that resulting gaps in the upper side and the lower side can be closed by means of fit plates (8, 9) which are each supported on the two metal profiles (1, 2), wherein the fit plates (8, 9) are each welded to the two metal profiles (1, 2) and the sliding seat is positionally fixed by welding.

2. Composite system according to Claim 1,
**characterized in that**
at least one of the two lateral portions (3, 4) which jointly form the sliding seat has a projection (5) which is directed towards the other lateral portion (3, 4) and which can be displaced horizontally along a bearing surface of the other lateral portion (3, 4).

3. Composite system according to Claim 2,
**characterized in that**
the two metal profiles (1, 2) are connected to one another by means of a fillet seam (7) which is delimited by an end side of the projection (5) and the bearing surface (6).

4. Composite system according to Claim 1,
**characterized in that**
the two lateral portions (3, 4) which jointly form the sliding seat each have a projection (5, 10) which is directed towards the other lateral portion (3, 4) and which can be displaced horizontally along a bearing surface (6, 11) of the other lateral portion (3, 4), wherein the lateral portions (3, 4) are formed point-symmetrically with respect to a central connecting point between the two metal profiles (1, 2).

5. Composite system according to Claim 3,
**characterized in that**
the two metal profiles (1, 2) are connected to one another by means of two fillet seams (7, 12) which are each delimited by an end side of one of the projections (5, 10) and an associated bearing surface (6, 11).

6. Composite system according to one of Claims 1 to 5,
**characterized in that**
the fit plates (8, 9) are each connected by V-seams to the adjoining metal profiles (1, 2).

7. Composite system according to one of Claims 1 to 6,
**characterized in that**
the metal profiles (1, 2) are present as extruded profiles (3, 4).

## Revendications

1. Système d'assemblage composé d'au moins deux profilés ( 1, 2 ) métalliques qui sont réalisés pour la formation d'une structure de paroi ou de fond, des parties ( 3, 4 ) latérales voisines l'une de l'autre et assemblées l'une à l'autre des deux profilés ( 1, 2 ) métalliques étant conçues pour former conjointement un siège de coulissement,
**caractérisé en ce que**
les parties ( 3, 4 ) latérales d'un corps principal respectif des profilés ( 1, 2 ) métalliques sont en saillie et sont à une distance telle respectivement d'une face supérieure et d'une face inférieure du système d'assemblage que des lacunes qui se produisent dans la face supérieure et dans la face inférieure peuvent être fermées par des tôles ( 8, 9 ) d'adaptation, qui sont appuyés respectivement sur les deux profilés ( 1, 2 ) métalliques,
les tôles ( 8, 9 ) d'adaptation étant soudées respectivement aux deux profilés ( 1, 2 ) métalliques et le siège de coulissement étant immobilisé en position par soudage.

2. Système d'assemblage suivant la revendication 1,
**caractérisé en ce que**
au moins l'une des deux parties ( 3, 4 ) latérales, qui forment conjointement le siège de coulissement, a une saillie ( 5 ) dirigée sur l'autre partie ( 3, 4 ) latérale et pouvant coulisser horizontalement le long d'une surface de contact de l'autre partie latérale.

3. Système d'assemblage suivant la revendication 2,
**caractérisé en ce que**
les deux profilés ( 1, 2 ) métalliques sont assemblés l'un à l'autre au moyen d'une soudure ( 7 ) d'angle, qui est délimitée par la surface ( 6 ) de contact.

4. Système d'assemblage suivant la revendication 1,
**caractérisé en ce que**
deux parties ( 3, 4 ) latérales qui forment conjointement le siège de coulissement font respectivement une saillie ( 5, 10 ) dirigée sur l'autre partie ( 3, 4 ) latérale et pouvant coulisser horizontalement le long d'une surface ( 6, 11 ) de contact de l'autre partie ( 3, 4 ) latérale, les parties ( 3, 4 ) latérales étant symétriques par rapport à un point de liaison central entre les deux profilés ( 1, 2 ) métalliques.

5. Système d'assemblage suivant la revendication 3,
**caractérisé en ce que**
les deux profilés ( 1, 2 ) métalliques sont assemblés l'un à l'autre au moyen de deux soudures ( 7, 12 ) en angle, qui sont délimitées respectivement par un côté frontal de l'une des saillies ( 5, 10 ) et par une surface ( 6, 11 ) de contact associée.

6. Système d'assemblage suivant l'une des revendications 1 à 5,
**caractérisé en ce que**
les tôles ( 8, 9 ) d'adaptation sont assemblées respectivement par des soudures en V aux profilés ( 1, 2 ) métalliques voisins.

7. Système d'assemblage suivant l'une des revendications 1 à 6,
**caractérisé en ce que**
les profilés ( 1, 2 ) métalliques se présentent sous la forme de profilés ( 3, 4 ) filés à la presse.
